# EUROPÄISCHE PATENTANMELDUNG

(11) **EP 4 428 029 A1**
(43) Veröffentlichungstag der Anmeldung: **11.09.2024**
(21) Anmeldenummer: 23160567.6
(22) Anmeldetag: 07.03.2023
(51) Int. Cl.: B63B 32/73, F16G 11/08

(54) **VERBINDUNGSANORDNUNG**

(71) Anmelder: UNLCKED UG (haftungsbeschränkt), 22299 Hamburg (DE)
(72) Erfinder: Höpcke, Klaas Gunnar, 20146 Hamburg (DE)
(74) Vertreter: Glück Kritzenberger Patentanwälte PartGmbB

(57) **Zusammenfassung**

Die Erfindung betrifft eine Verbindungsanordnung (10, 10a) zur Verbindung eines Objekts mit einer Leine (18), umfassend ein erstes Befestigungsteil (12) zur Befestigung an dem Objekt und ein zweites Befestigungsteil (16; 50) zur Befestigung der Leine (18), welches mit dem ersten Befestigungsteil (12) über ein biegsames Verbindungselement (20) relativ zueinander bewegbar verbunden sind. Das erste Befestigungsteil (12) weist eine von dem Verbindungselement (20) durchsetzte Bohrung (26) auf und das Verbindungselement (20) ist rotierbar in der Bohrung (26) gehalten. Das zweite Befestigungsteil (16; 50) weist einen Aufnahmebereich (36; 60) mit einer in den Aufnahmebereich führenden Perforierung (42; 61) für die Leine (18) aufweist, welcher Aufnahmebereich derart dimensioniert ist, dass er einen Knoten (62) der Leine (18) aufnehmen kann und eine Rotation des Knotens (62) erlaubt.

## Beschreibung

Die vorliegende Erfindung betrifft eine Verbindungsanordnung zur Verbindung eines Objekts mit einer Leine. Derartige Verbindungsanordnungen werden beispielsweise für Surfboards benötigt, um das Leine eines Boards an dem Handgelenk oder Fußgelenk zu befestigen, wobei auf diese Weise sowohl Windsurfboards, Kiteboards als auch Stand-Up-Paddelboards am Körper festgelegt werden können. Natürlich kann mittels einer derartigen Verbindungsanordnung ein jegliches eine Leine aufweisendes Teil an jeder Art von Objekt festgelegt werden, wie zum Beispiel an einen Befestigungsring oder einen Befestigungspfahl im Wasser. Eine derartige Verbindungsanordnung hat ein erstes und ein zweites Befestigungsteil, die über ein biegsames Verbindungselement miteinander verbunden sind. Das erste Befestigungsteil wird an dem Objekt, beispielsweise dem Körper oder an einem anderen Teil, wie zum Beispiel einem Brustgeschirr für ein Trapez, festgelegt, während das zweite Befestigungsteil mit der Leine verbunden wird, die beispielsweise vom Surfboard kommt. Eine derartige Verbindungsanordnung ist beispielsweise aus der US 4,044,415 B bekannt. Ein Nachteil dieser bekannten Verbindungsanordnung besteht darin, dass ihr Aufbau relativ kompliziert ist und sich die gesamte Verbindungsanordnung im häufigen Gebrauch mehrmals verdrehen kann, wodurch die Materialien dann belastet werden und was schließlich auch die Handhabung erschwert.

Es ist daher Aufgabe der Erfindung, eine Verbindungsanordnung zu schaffen, die eine einfache Verbindung eines Objekts mit einer Leine ermöglicht und die auch bei häufigem Gebrauch und Verdrehung der beiden Befestigungsteile relativ zueinander die Nutzung beziehungsweise die Funktion der Verbindungsanordnung nicht beeinträchtigt.

Diese Aufgabe wird durch eine Verbindungsanordnung gemäß Anspruch 1 gelöst. Vorteilhafte Weiterbildungen sind Gegenstand der abhängigen Ansprüche. Vorteilhafte Ausführungsformen der Erfindung sind ebenfalls in der Beschreibung und in den Zeichnungen beschrieben.

Erfindungsgemäß hat die Verbindungsanordnung ein erstes Befestigungsteil zur Befestigung an dem Objekt und ein zweites Befestigungsteil zur Befestigung der Leine, wobei das zweite Befestigungsteil mit dem ersten Befestigungsteil über ein biegsames Verbindungselement derart verbunden ist, dass die beiden Befestigungsteile voneinander beabstandet und in einem gewissen Rahmen relativ zueinander bewegbar sind. Ein derartiges Verbindungselement kann ein Tau, eine Leine, ein Kabel oder dergleichen sein. Erfindungsgemäß weist das erste Befestigungsteil eine von dem Verbindungselement durchsetzte Bohrung auf, um das Verbindungselement rotierbar in der Bohrung zu halten. Das zweite Befestigungsteil weist einen Aufnahmebereich mit einer in den Aufnahmebereich führenden Perforierung für die Leine auf, und der Aufnahmebereich ist derart dimensioniert, dass er einen Knoten der Leine aufnehmen kann und eine Rotation des Knotens im Aufnahmebereich erlaubt.

Die erfindungsgemäße Verbindungsanordnung erlaubt somit eine Rotation des Verbindungselements in dem ersten Befestigungsteil und zusätzlich eine Rotation der Leine in dem zweiten Befestigungsteil, so dass sich auch bei einer häufigeren Verdrehung der beiden Befestigungsteile zueinander das Verbindungselement nicht verdreht oder verspannt, wodurch die Funktionsfähigkeit der Verbindungsanordnung gewährleistet bleibt und die Handhabung nicht beeinträchtigt wird. Das Verbindungselement kann eine Leine oder ein Kabel sein, so dass die beiden Befestigungsteile relativ zueinander relativ frei beweglich sind.

In einer vorteilhaften Weiterbildung der Erfindung ist das erste Befestigungsteil länglich ausgebildet, und die Bohrung verläuft parallel zu seiner Längsachse, wobei die Bohrung an einem ersten Längsende des ersten Befestigungsteils zu einem gegenüber der Bohrung durchmessergrößeren zylindrischen Aufnahmeabschnitt erweitert ist und der Aufnahmeabschnitt zur drehbaren Aufnahme einer an dem Verbindungselement festgelegten Verdickung, zum Beispiel eines Knotens oder dergleichen, ausgebildet ist. Auf diese Weise wird eine einfache Rotierbarkeit des Verbindungselements relativ zum ersten Befestigungsteil sichergestellt.

Vorzugsweise ist zumindest ein Längsabschnitt des ersten Befestigungsteils rotationssymmetrisch ausgebildet, und die Bohrung befindet sich im Rotationszentrum des rotationssymmetrischen Abschnitts. Auf diese Weise wird eine zentrale Krafteinleitung in das erste Befestigungsteil sichergestellt. Vorzugsweise ist ein Längsende des ersten Befestigungsteils tellerförmig erweitert, und in dem Zentrum des Tellers ist der Aufnahmeabschnitt für das Verbindungselement ausgebildet. Das tellerförmig erweiterte Längsende des Befestigungsteils kann somit leicht am Objekt befestigt werden, z.B. in einer Klettbandschlaufe zur Befestigung an einem Hand- oder Fußgelenk oder in einem Brustgeschirr für eine Trapezbefestigung.

Deshalb weist vorzugsweise die Verbindungsanordnung eine Befestigungsmanschette, z.B. Klettband für ein Fußgelenk oder ein Handgelenk auf, welches mit dem ersten Befestigungsteil verbunden, insbesondere von diesem durchsetzt ist, wobei die tellerförmige Erweiterung an der Innenseite der Befestigungsmanschette anliegt, so dass das Verbindungselement der Verbindungsanordnung auch bei einem Zug an dem Verbindungselement fest mit dem Objekt beziehungsweise mit einer Person verbunden bleibt. Durch das tellerförmig erweiterte Längsende liegt nämlich das erste Befestigungsteil an der Innenseite der Befestigungsmanschette flächig an und kann somit nicht an dem Punkt aus der Befestigungsmanschette herausgezogen werden, an welchem das Befestigungsteil die Befestigungsmanschette durchsetzt.

In einer vorteilhaften Ausführungsform der Erfindung ist die Form des ersten Befestigungsteils über einen Großteil seiner Länge zylindrisch oder kegelförmig, was dazu führt, dass das Verbindungselement sicher und rotierbar in dem zylindrischen oder kegelförmigen Abschnitt, und zwar in dessen Zentrum, gehalten werden kann.

Vorzugsweise geht der Aufnahmeabschnitt am Ende der Bohrung mittels eines runden Verbindungsabschnitts in die Bohrung über, wodurch scharfe Kanten vermieden werden, die eventuell das Verbindungselement an seiner Verdickung, zum Beispiel einem Knoten, beschädigen könnten.

In einer vorteilhaften Ausführungsform der Erfindung besteht das zweite Befestigungsteil aus einer Textil- oder Kunststofflasche, die derart zusammengefaltet ist, dass die Endabschnitte der Lasche aneinander liegen, und dass zwischen den aneinander liegenden Endabschnitten der Lasche eine Schlaufe gebildet ist, die den Aufnahmebereich für den Knoten der Leine bildet, und in welcher Schlaufe eine Perforierung für die Leine angeordnet ist. Der Knoten am Ende der Leine liegt somit zugsicher in der Schlaufe, und zudem kann sich der Knoten im Aufnahmebereich, der durch die Schlaufe gebildet wird, frei drehen.

Vorzugsweise werden die aneinander liegenden Endabschnitte der Lasche von dem Verbindungselement durchsetzt und durch dieses in ihrer aneinander liegenden Lage gesichert. Auf diese Weise wird vermieden, dass sich die Schlaufe öffnen kann, denn je mehr Zug das Verbindungselement auf die aneinander liegenden Endabschnitte der Lasche ausübt, desto fester werden diese gegeneinander festgelegt.

In einer vorteilhaften Weiterbildung der Erfindung trägt einer der Endabschnitte ein Klettband, welches um das Verbindungselement und die beiden aneinander liegenden Endabschnitte der Lasche legbar ist, um diese aneinander festzulegen. Auf diese Weise wird die Verbindung der beiden Endabschnitte der Lasche noch einmal verbessert. Zudem wird das Verbindungselement in seiner Zufuhrposition relativ zu den Endabschnitten festgelegt. Schließlich wird dieser Bereich gegen äußere Einflüsse geschützt.

In einer alternativen Ausführungsform ist das zweite Befestigungsteil durch ein Formteil mit einem tonnenartigen oder zylindrischen Abschnitt gebildet, welcher in axialer Richtung in seiner Mitte den Aufnahmebereich für den Knoten der Leine und eine darin mündende radiale Bohrung für die Durchführung der Leine aufweist. Der tonnenförmige oder zylindrische Abschnitt hat an seinen beiden Endbereichen jeweils eine in Umfangsrichtung verlaufende Vertiefung, und das Verbindungselement weist an seiner dem zweiten Befestigungsteil zugewandten Seite eine Schlaufe auf, welche in den beiden Vertiefungen zu liegen kommt. Über die beiden Vertiefungen in Umfangsrichtung wird somit das zweite Befestigungsteil fest an dem Verbindungselement festgelegt, und der Aufnahmebereich oder Aufnahmeraum in der Mitte des tonnenartigen Abschnitts nimmt den Knoten am Ende der Leine auf, so dass die Leine in diesem Aufnahmebereich oder Aufnahmeraum gut rotieren kann. Ein derartiges Formteil kann vorzugsweise aus Kunststoff oder Kautschuk gebildet werden, ist damit leicht handhabbar, korrosionsresistent und kann mit weichen Kanten ausgebildet werden, so dass es im Gebrauch auch keine Verletzungsgefahr mit sich bringt.

Vorzugsweise hat das zweite Befestigungsteil an seiner der Bohrung gegenüberliegenden Seite einen sich radial erstreckenden Zufuhrabschnitt für das Verbindungselement, welcher das Verbindungselement mittig zu dem tonnenförmigen Abschnitt führt. Auf diese Weise wird bewirkt, dass das Verbindungselement zentral und radial auf den tonnenförmigen Abschnitt geführt wird, so dass sich die Verbindung der Schlaufe am Ende des Verbindungselements auch bei seitlicher Zugrichtung nicht von dem zweiten Befestigungsteil lösen kann und eventuell aus diesen Vertiefungen herausrutschen kann.

Es ist für den Fachmann offensichtlich, dass die oben genannten Ausführungsbeispiele, solange sie sich nicht widersprechen, in beliebiger Weise miteinander kombiniert werden können.

Folgende Begriffe werden synonym verwendet: Seil - Sicherungsseil zur Befestigung an einem Board

Die Erfindung wird nachfolgend beispielsweise anhand der schematischen Zeichnung beschrieben. In dieser zeigen:
- Fig. 1: eine Verbindungsanordnung einer Fußgelenkmanschette mit einer Surfbrettleine,
- Fig. 2: einen Schnitt II-II durch das erste Befestigungsteil der Verbindungsanordnung aus Fig. 1,
- Fig. 3: eine perspektivische Ansicht auf das erste Befestigungsteil mit der Fußgelenkmanschette aus Fig. 1,
- Fig. 4: einen Längsschnitt durch das erste Befestigungsteil, welches ein tellerförmig erweitertes Längsende zur Aufnahme in der Fußgelenkmanschette aufweist,
- Fig. 5: eine Ansicht V auf das zweite Befestigungsteil aus Fig. 1,
- Fig. 6: eine perspektivische Ansicht des zweiten Befestigungsteils aus Fig. 1,
- Fig. 7: ein zweites Ausführungsbeispiel einer Verbindungsanordnung, bei welcher das erste Befestigungsteil mit einer Fußgelenkmanschette verbunden ist, und das zweite Befestigungsteil durch eine zusammengefaltete Lasche gebildet ist,
- Fig. 8: eine Seitenansicht VIII auf das zweite Befestigungsteil aus Fig. 7,
- Fig. 9: eine Seitenansicht IX auf das zweite Befestigungsteil aus Fig. 7, und
- Fig. 10: eine Seitenansicht des zweiten Befestigungsteils auf Fig. 7, bei welchem ein Endabschnitt ein Klettband aufweist, welches jetzt über die beiden Endabschnitte und das Verbindungselement gewickelt ist.

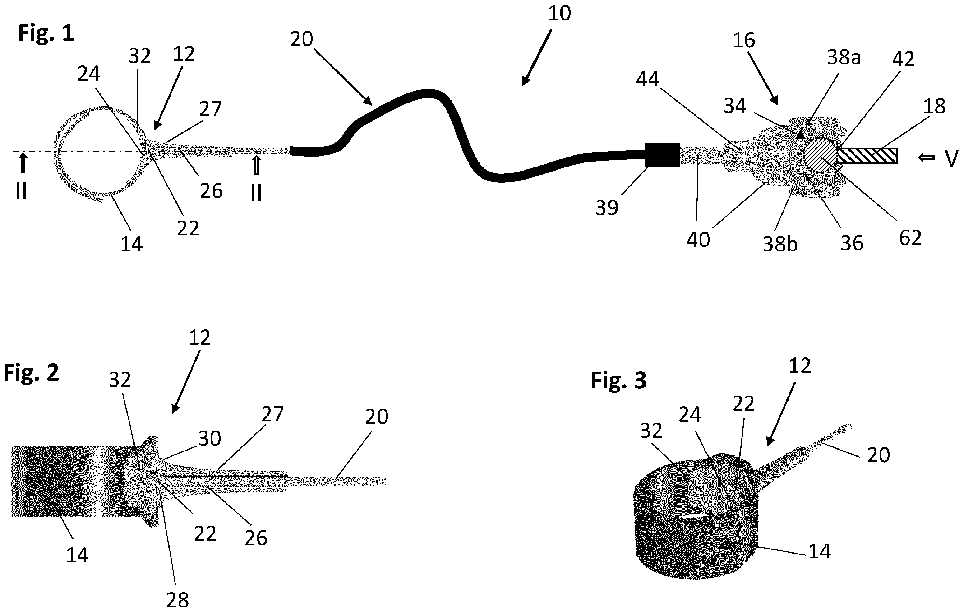

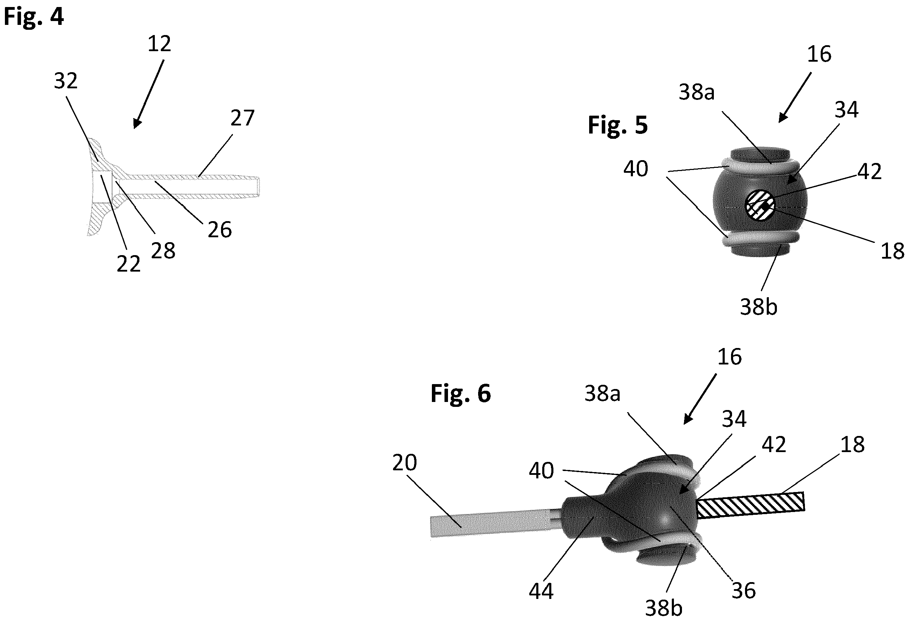

Fig. 1 zeigt eine Verbindungsanordnung 10 umfassend ein erstes längliches Befestigungsteil 12, welches zum Eingriff einer Fußgelenkmanschette 14 ausgebildet ist, ein zweites Befestigungsteil 16 zur rotierbaren Befestigung einer Leine 18 und ein längliches Verbindungselement 20 zwischen dem ersten Befestigungsteil 12 und dem zweiten Befestigungsteil 16, welches an einem Ende eine Verdickung 22 aufweist, die in einem zylindrischen Aufnahmeabschnitt 24 rotierbar gehalten ist, wobei das Verbindungselement 20 durch eine Bohrung 26 (siehe insbesondere Fig. 4) durch das erste Befestigungsteil 12 geführt ist. Der zylindrische Aufnahmeabschnitt 24 und die Bohrung 26 sind mittels eines runden Übergangsbereich 28 miteinander verbunden, so dass in dem Übergangsbereich 28 zwischen der Bohrung 26 und dem Aufnahmeabschnitt 24 keine scharfen Kanten gebildet sind, die das Verbindungselement 20 beziehungsweise dessen Verdickung 22 am Ende eventuell verletzen könnten. Das Verbindungselement 20 weist an seiner dem zweiten Befestigungsteil 16 zugewandten Seite eine Schlaufe 40 auf, die durch Umknicken des freien Endes des Verbindungelements 20 und durch festlegen des freien Endes durch einen Spleiß 39 gebildet wird. Der überwiegende Teil der Bohrung 26 des ersten Befestigungsteils 12 ist in einem zylindrischen oder leicht kegelförmigen Längsabschnitt 27 des ersten Befestigungsteils angeordnet.

Die Fig. 2 und 3 zeigen sehr deutlich, wie das erste Befestigungsteil 12 eine Perforierung 30 in der Fußgelenkmanschette durchsetzt und wie sich ein tellerförmig aufgeweitetes Längsende 32 des ersten Befestigungsteils 12 an der Innenseite der Fußschlaufe abstützt, siehe insbesondere Fig. 3. Auf diese Weise wird das erste Befestigungsteil 12 sicher in der Fußschlaufe gehalten, und durch das Zusammenwirken von dem zylindrischen Aufnahmeabschnitt 22 in Verbindung mit der Verdickung 22 am Ende des Verbindungselements wird eine Rotierbarkeit des Verbindungselements 20 in der Bohrung 26 und in dem Aufnahmeabschnitt 24 sichergestellt.

Fig. 1 zeigt deutlich das zweite Befestigungsteil 16, welches einen tonnenförmigen Abschnitt 34 aufweist, in dessen zentraler Mitte ein Aufnahmebereich 36 für einen Knoten am Ende der Leine 18 ausgebildet ist. Zudem hat der tonnenförmige Abschnitt 34 des zweiten Befestigungsteils 16 an seinen beiden Längsenden jeweils eine in Umfangsrichtung verlaufende Vertiefung 38a, 38b, die von der Verbindungsschlaufe 40 am Ende des Verbindungselements 20 durchsetzt wird, wodurch das zweite Befestigungsteil sicher in der Schlaufe 40 des Verbindungselements 20 festgelegt ist. Die Mitte des tonnenförmigen Abschnitts 34 hat eine Perforierung 42, durch welche die Leine 18 in den Aufnahmebereich 36 geführt ist. Gegenüber dieser Perforierung 42 ist ein sich radial erstreckender Zufuhrabschnitt 44 des zweiten Befestigungsteils 16 ausgebildet, durch welche das Verbindungselement radial und mittig dem zweiten Befestigungsteil zugeführt wird, so dass eine sichere Verbindung des zweiten Befestigungsteils 16 in der Schlaufe 40 des Verbindungselements 20 auch bei seitlicher Zugkraft sichergestellt ist.

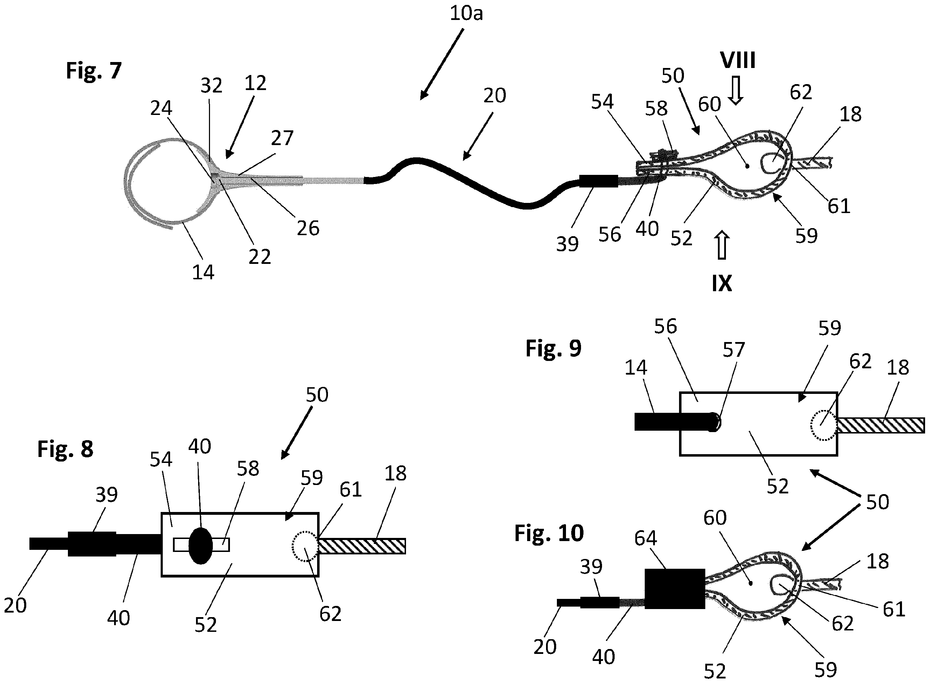

Fig. 7 zeigt eine zweite Ausführungsform 10a der erfindungsgemäßen Verbindungsanordnung, bei welcher das erste Befestigungsteil 12 und das Verbindungselement 20 mit seiner endseitigen Schlaufe 40 identisch zur ersten Ausführungsform gemäß Fig. 1 ausgebildet ist. Jedoch ist in dieser Ausführungsform das zweite Befestigungsteil 50 durch eine gefaltete Lasche 52 z.B. aus einem Textil- oder Kunststoffmaterial gebildet ist, deren beide Endabschnitte 54, 56 aneinander liegen, und deren mittiger gebogener Bereich der Lasche 52 zwischen den Endabschnitten 54, 56 einen durch die Schlaufe der gefalteten Lasche 52 gebildeten Aufnahmebereich 60 für einen Knoten 62 am Ende der Leine 18 bildet. Die Lasche 52 weist mittig eine Perforation 61 zum Einführen der Leine 18 in den Aufnahmebereich 60 auf.

Die am Ende des Verbindungselements 20 ausgebildete Schlaufe 40 durchsetzt jeweils eine Perforation 55 in den beiden Endabschnitten 54, 56 und ist durch ein längliches Sicherungselement 58 in seiner die Perforation 55 der beiden Endabschnitte 54, 56 durchsetzenden Stellung gesichert. Auf diese Weise bleiben die Endabschnitte 54, 56 fest miteinander verbunden, auch wenn ein größerer Zug auf die Lasche 52 ausgeübt wird.

Schließlich zeigt Fig. 10 ein vorzugsweise an einem der beiden Endabschnitte 54, 56 angebrachtes Klettband 64, welches in der in Fig. 1 dargestellten Wickelstellung um die beiden Endabschnitte 54, 56 und die Schlaufe 40 am Ende des Verbindungselements gewickelt ist, um diesen Bereich und die Zuführung der Schlaufe festzulegen.

In dieser Ausführungsform könnte das Ende des Verbindungselements 20 auch als einfaches Tauende ausgeführt sein, welches nach seinem Durchführen durch die beiden Endabschnitte 54, 56 verknotet und auf diese Weise in seiner die Perforationen 55 der Endabschnitte 54, 56 durchsetzenden Stellung gesichert wird.

In beiden Ausführungsformen ist eine Rotierbarkeit des Verbindungselements 20 in dem ersten Befestigungsteil als auch eine Rotierbarkeit der Leine 18 in dem zweiten Befestigungsteil 16, 50 sichergestellt.

Die Erfindung ist nicht auf die dargestellten Ausführungsbeispiele beschränkt, sondern kann innerhalb des Schutzbereichs der beigefügten Patentansprüche variiert werden.

### Bezugszeichenliste

- 10: Verbindungsanordnung (erstes Ausführungsbeispiel)
- 12: erstes Befestigungsteil
- 14: Fußmanschette zur Verbindung mit dem ersten Befestigungsteil
- 16: zweites Befestigungsteil zur Verbindung mit einer Leine, einem Seil oder einem Tau (erste Ausführungsform)
- 18: anzusteckende Leine, Seil oder Tau
- 20: Verbindungselement zwischen dem ersten und zweiten Befestigungsteil, insbesondere als Seil oder Tau oder Kabel ausgebildet
- 22: Verdickung, z.B. Knoten an dem Ende des Verbindungselements, welches dem ersten Befestigungsteil zugewandt ist
- 24: zylindrischer Aufnahmeabschnitt am Ende der Bohrung des ersten Befestigungsteils zur Aufnahme der Verdickung des Befestigungsteils
- 26: Bohrung im ersten Befestigungsteil zur Aufnahme des Verbindungselements
- 27: rotationssymmetrischer Längsabschnitt des ersten Befestigungsteils, insbesondere zylindrisch oder kegelförmig
- 28: abgerundeter Übergangsbereich zwischen Bohrung und zylindrischem Aufnahmeabschnitt
- 30: Perforierung in der Fußmanschette zur Durchführung des ersten Befestigungsteils
- 32: tellerförmig aufgeweitetes Längsende des ersten Befestigungsteils
- 34: tonnenförmiger Abschnitt des zweiten Befestigungsteils
- 36: in dem tonnenförmigen Abschnitt ausgebildeter Aufnahmebereich/Aufnahmeraum für den Knoten der Leine
- 38a, b: umlaufende Vertiefungen in den Endbereichen des tonnenförmigen Abschnitts zur Aufnahme der Schlaufe am Ende des Verbindungselements
- 39: Spleiß zur Festlegung des freien Endes des Verbindungselements zur Schlaufenbildung
- 40: Schlaufe am Ende des Verbindungselements, welches dem zweiten Befestigungsteil zugewandt ist
- 42: Perforierung im tonnenförmigen Abschnitt zum Durchführen der Leine in den Aufnahmebereich/Aufnahmeraum des tonnenförmigen Abschnitts
- 44: mit dem tonnenförmigen Abschnitt verbundener, sich radial erstreckender mittiger Zufuhrabschnitt für die Schlaufe des Verbindungselements
- 50: zweites Befestigungsteil (zweite Ausführungsform)
- 52: Lasche aus Textil und/oder Kunststoffmaterial
- 54: erster Endabschnitt der Lasche
- 56: zweiter Endabschnitt der Lasche
- 57: Perforation in den Endabschnitten zum Durchsetzen er Schlaufe am Ende des Verbindungselements
- 58: längliches Sicherungselement zum Sichern der die Perforationen der Endabschnitte durchsetzenden Position der Schlaufe
- 59: durch Falten der Lasche gebildete Schlaufe zur Bildung des Aufnahmebereichs für einen Knoten der Leine
- 60: durch die Schlaufe der Lasche gebildeter Aufnahmebereich für einen Knoten in der Leine, bevorzugt an deren Ende
- 61: mittige Perforation in der Lasche zur Durchführung der Leine in den Aufnahmebereich
- 62: Knoten am Ende der Leine
- 64: insbesondere an einem Endabschnitt befestigtes Klettband zum Umwickeln der freien Endabschnitte der Laschen und der Schlaufe des Verbindungselements

## Patentansprüche

1. Verbindungsanordnung (10, 10a) zur Verbindung eines Objekts mit einer Leine (18), umfassend ein erstes Befestigungsteil (12) zur Befestigung an dem Objekt und ein zweites Befestigungsteil (16; 50) zur Befestigung der Leine (18), welches zweite Befestigungsteil (16; 50) mit dem ersten Befestigungsteil (12) über ein biegsames Verbindungselement (20) derart verbunden ist, dass die beiden Befestigungsteile (12, 16; 12, 50) voneinander beabstandet und relativ zueinander bewegbar sind, **dadurch gekennzeichnet, dass** das erste Befestigungsteil (12) eine von dem Verbindungselement (20) durchsetzte Bohrung (26) aufweist, dass das Verbindungselement (20) rotierbar in der Bohrung (26) gehalten ist, dass das zweite Befestigungsteil (16; 50) einen Aufnahmebereich (36; 60) mit einer in den Aufnahmebereich führenden Perforierung (42; 61) für die Leine (18) aufweist, und dass der Aufnahmebereich (36; 60) derart dimensioniert ist, dass er einen Knoten (62) der Leine (18) aufnehmen kann und eine Rotation des Knotens (62) im Aufnahmebereich (36; 60) erlaubt.

2. Verbindungsanordnung (10, 10a) nach Anspruch 1, **dadurch gekennzeichnet, dass** das erste Befestigungsteil (12) länglich ausgebildet ist und die Bohrung (26) parallel zu seiner Längsachse verläuft, wobei die Bohrung (26) an einem ersten Längsende des ersten Befestigungsteils (12) zu einem gegenüber der Bohrung (26) durchmessergrößeren zylindrischen Aufnahmeabschnitt (24) erweitert ist, wobei der Aufnahmeabschnitt (24) zur drehbaren Aufnahme einer an dem Verbindungselement (20) festgelegten Verdickung (22), z.B. eines Knotens ausgebildet ist.

3. Verbindungsanordnung (10, 10a) nach Anspruch 2, **dadurch gekennzeichnet, dass** zumindest ein Längsabschnitt (27) des ersten Befestigungsteils (12) rotationssymmetrisch ist und die Bohrung (26) sich im Rotationszentrum des rotationssymmetrischen Längsabschnitts (27) erstreckt.

4. Verbindungsanordnung (10, 10a) nach Anspruch 2 oder 3, **dadurch gekennzeichnet, dass** ein Längsende des ersten Befestigungsteils (12) tellerförmig erweitert (42) ist, und dass in dem Zentrum der tellerförmigen Erweiterung (42) der zylindrische Aufnahmeabschnitt (24) ausgebildet ist.

5. Verbindungsanordnung (10, 10a) nach Anspruch 4, **dadurch gekennzeichnet, dass** sie eine Befestigungsmanschette (14) für ein Fußgelenk oder ein Handgelenk aufweist, die von dem ersten Befestigungsteil (12) durchsetzt wird, wobei die tellerförmige Erweiterung (32) an der Innenseite der Befestigungsmanschette (14) anliegt.

6. Verbindungsanordnung (10, 10a) nach einem der Ansprüche 2 bis 5, **dadurch gekennzeichnet, dass** das das Befestigungsteils (12) über einen Großteil seiner Länge durch einen zylindrischen oder kegelförmigen Längsabschnitt (27) gebildet ist.

7. Verbindungsanordnung (10, 10a) nach einem der vorhergehenden Ansprüche, **dadurch gekennzeichnet, dass** der Aufnahmeabschnitt (24) mittels eines runden Übergangsbereichs (28) in die Bohrung (26) übergeht.

8. Verbindungsanordnung (10, 10a) nach einem der vorhergehenden Ansprüche, **dadurch gekennzeichnet, dass** das zweites Befestigungsteil (50) eine Lasche (52), insbesondere aus Textil- oder Kunststoffmaterial umfasst, die derart zusammengefaltet ist, dass die Endabschnitte (54, 56) der Lasche (52) aneinander liegen, und dass zwischen den aneinander liegenden Endabschnitten (54, 56) der Lasche (52) eine den Aufnahmebereich (60) für den Knoten (61) der Leine (18) bildende Schlaufe (59) gebildet ist, in welcher die Perforierung (42; 61) für die Leine (18) angeordnet ist.

9. Verbindungsanordnung (10, 10a) nach Anspruch 8, **dadurch gekennzeichnet, dass** die aneinander liegenden Endabschnitte (54, 56) der Lasche (52) von dem Verbindungselement (20) oder einer an deren Ende angeordneten Schlaufe (40) durchsetzt und dadurch in ihrer aneinander liegenden Lage gesichert sind.

10. Verbindungsanordnung (10, 10a) nach Anspruch 8 oder 9, **dadurch gekennzeichnet, dass** ein Endabschnitt (54, 56) ein Klettband (64) trägt, welches um das Verbindungselement (20) und die beiden aneinander liegenden Endabschnitte (54, 56) legbar ist, um diese aneinander festzulegen.

11. Verbindungsanordnung (10, 10a) nach einem der Ansprüche 1 bis 7, **dadurch gekennzeichnet, dass** das zweite Befestigungsteil (16) durch ein Formteil mit einem tonnenförmigen oder zylindrischen Abschnitt (34) gebildet ist, welcher in axialer Richtung in seiner Mitte den Aufnahmebereich (36) für den Knoten der Leine (18) und eine darin mündende radiale Perforation (42) für die Durchführung der Leine (18) aufweist und dass der tonnenförmige oder zylindrische Abschnitt (34) in seinen beiden Endbereichen jeweils eine in Umfangsrichtung verlaufende rinnenartige Vertiefung (38a, 38b) aufweist, und dass das Verbindungselement (20) an seiner dem zweiten Befestigungsteil (50) zugewandten Seite eine Schlaufe (40) aufweist, welche in den beiden Vertiefungen (38a, 38b) zu liegen kommt.

12. Verbindungsanordnung (10, 10a) nach Anspruch 11, **dadurch gekennzeichnet, dass** an der der Perforierung (42) gegenüberliegenden Seite des tonnenförmigen oder zylindrischen Abschnitts (34) mittig ein sich radial erstreckender Zufuhrabschnitt (44) für das Verbindungselement (20) ausgebildet ist, welcher das Verbindungselement (20) bzw. die Schlaufe (40) radial und mittig zu dem tonnenförmigen Abschnitt (34) zuführt.

13. Verbindungsanordnung (10, 10a) nach einem der vorhergehenden Ansprüche, **dadurch gekennzeichnet, dass** das Verbindungselement (20) durch ein Tau, ein Seil oder ein Kabel gebildet ist.
